# EUROPÄISCHE PATENTSCHRIFT

(11) **EP 2 427 641 B1**
(45) Veröffentlichungstag und Bekanntmachung des Hinweises auf die Patenterteilung: **08.04.2015**
(21) Anmeldenummer: 10719937.4
(22) Anmeldetag: 07.05.2010
(51) Int. Cl.: F02N 9/04, F02N 19/02

(54) **VERFAHREN ZUM STARTEN EINER MIT BRENNGAS BETRIEBENEN BRENNKRAFTMASCHINE**
METHOD FOR STARTING A GAS ENGINE
PROCÉDÉ DE DÉMARRAGE D'UN MOTEUR À GAZ

(30) Priorität: 07.05.2009 AT 6962009
(43) Veröffentlichungstag der Anmeldung: 14.03.2012
(73) Patentinhaber: AVL List GmbH, 8020 Graz (AT)
(72) Erfinder: BERGER, Manuel, A-4493 Wolfern (AT); BAUFELD, Torsten, A-8045 Graz (AT); MOHR, Hinrich, 21643 Beckdorf (DE)
(74) Vertreter: Babeluk, Michael
(86) Internationale Anmeldenummer: PCT/EP2010/056223
(87) Internationale Veröffentlichungsnummer: WO 2010/128127

(56) Entgegenhaltungen:
- WO-A1-2007/003693
- DE-A1-102004 035 301
- JP-A- 6 257 539
- US-A- 4 162 668
- US-A- 5 870 978
- US-A1- 2004 011 303
- US-A1- 2004 107 941
- ANONYMOUS: "DUAL FUEL DIESEL METHANE INJECTION" AUTOMOTIVE ENGINEERING, SOCIETY OF AUTOMOTIVE ENGINEERS. WARRENDALE, US, Bd. 97, Nr. 9, 1. September 1989 (1989-09-01), Seiten 17-23, XP000117891 ISSN: 0098-2571
- Kristian Ölander: "Dual-fuel-electric for LNGC" 4. Januar 2006 (2006-01-04), Seiten 1-47, XP002605306 Gefunden im Internet: URL:http://www.wartsila-hyundai.com/filedo wn?alias=adpds&file=Wartsila%2B50%2BDF%2BD ual%2Bfuel%2Bengine%2Breference%2Bfor%2BLN GC%2B04%2B01%2B07%2Bppt.pdf [gefunden am 2010-10-14]
- Anonymous: "Wärtsilä 50SG Engine Technology" Wärtsilä September 2010 (2010-09), XP002605307 Gefunden im Internet: URL:http://www.wartsila-nsd.com/Wartsila/g lobal/docs/en/power/media_publications/bro chures/engines/50SG-gas-engine-technology- brochure.pdf [gefunden am 2010-10-14]
- ULF ÅSTRAND: "Wärtsilä 20V34SG experience from the first installation" ENERGY NEWS - ISSUE 13, [Online] Nr. 13, 6, November 2001 (2001-11), Seiten 18-21, XP002605308 Vaasa, Finland ISSN: 1456-3274 Gefunden im Internet: URL:http://www.wartsila-nsd.com/Wartsila/g lobal/docs/en/power/media_publications/ene rgy_news/13/wartsila20v34sg_experience_fro m_the_first_installation.pdf> [gefunden am 2010-10-14]

## Beschreibung

Die Erfindung betrifft Verfahren zum Starten einer mit Brenngas betriebenen Brennkraftmaschine mit innerer Verbrennung, insbesondere eines Großgasmotors, wobei die Bildung eines brennbaren Gas/Luft-Gemisches im Einlasssystem, insbesondere in einem Gasmischer stromaufwärts eines Laders, erfolgt, mit einer ersten und einer zweiten Gruppe von Zylindern, wobei während der Startphase eine erste Gruppe von Zylindern zumindest zeitweise gefeuert betrieben wird und in die Zylinderräume der zweiten Gruppe von Zylindern zumindest zeitweise Druckluft eingeblasen wird.

Aus der JP 06 200 57 539 A ist ein Großgasmotor mit zwei V-förmig angeordneten Zylinderbänken bekannt, wobei während der Startphase eine erste Zylinderbank gefeuert und eine zweite Zylinderbank ungefeuert betrieben wird. Die zweite Zylinderbank wird dabei von der Kraftstoffversorgung getrennt und mit einer Druckluftversorgung verbunden.

Die Entgegenhaltung US 5,870,978 A offenbart einen Großgasmotor mit zwei V-förmig angeordneten Zylinderbänken mit innerer Verbrennung und mit im Einlasssystem gebildetem, brennbaren Gas/Luft-Gemisch. Gas und ein selbstzündender Pilot-Kraftstoff werden von zwei getrennten Einspritzventilen im Einlasssystem eingebracht und in den Zylinderräumen gefeuert. Während einer Startphase werden Gas- und Pilot-Kraftstoff eingespritzt und von Startzündkerzen in den Zylinderräumen gefeuert. Die Startzündkerzen bleiben aktiv, bis ein selbstzündender Betrieb erreicht wird.

Aus der US 2004/011303 A1 ist ein Gasmotor bekannt, wobei während der Startphase ein selbstzündender Pilot-Kraftstoff eingespritzt wird, wenn die Drehzahl der Brennkraftmaschine unterhalb einer definierten Startdrehzahl liegt. Dadurch wird das Gas/Luft-Gemisch mit einer Startzündkerze gezündet, bis in den Zylinderräumen eine definierte Betriebstemperatur erreicht wird.

Weitere Startsysteme für pilotkraftstoffeinspritzende Gasmotoren sind aus den Druckschriften US 2004/0107941 A, JP 6-257539 A und WO 2007/003693 A1 bekannt.

Bei Großgasmotoren erfolgt üblicherweise die Gemischbildung direkt im Einlasssystem oder in einem zentralen Gasmischer stromaufwärts des Abgasturboladers. Das Gemisch wird im Abgasturbolader verdichtet, und nach passieren des Ladeluftkühlers über die Ladegemischleitung den einzelnen Zylindern zugeführt. Beim Startvorgang mit Druckluft würde das Gas/Luft-Gemisch durch die Druckluft derart verdünnt werden, dass die Brennkraftmaschine nicht zünden und damit auch nicht starten würde.

Aufgabe der Erfindung ist es, diese Nachteile zu vermeiden und ein zuverlässiges Starten auch bei niedrigen Temperaturen bei einer mit Brenngas betriebenen Brennkraftmaschine zu ermöglichen.

Erfindungsgemäß wird dies dadurch erreicht, folgende Schritte durchgeführt werden:
- Zu Beginn des Startvorganges Einblasen von Druckluft in alle Zylinder der ersten und zweiten Gruppe von Zylindern, solange die Drehzahl der Brennkraftmaschine eine definierte Losbrechdrehzahl unterschreitet, wobei bei Überschreiten der Losbrechdrehzahl die Druckluftzufuhr zur ersten Gruppe von Zylindern deaktiviert wird
- Zünden des Gas/Luft-Gemisches in den Zylinderräumen der ersten Gruppe von Zylindern mit jeweils zumindest einer Startzündkerze pro Zylinder;
- Stoppen der Druckluftzufuhr zur zweiten Gruppe von Zylindern und zünden des eingeblasenen Gas/Luft-Gemisches in den Zylinderräumen der zweiten Gruppe von Zylindern mit jeweils zumindest einer Startzündkerze pro Zylinder, wenn die Drehzahl der Brennkraftmaschine eine definierte Startdrehzahl überschreitet;
- Einbringen von selbstzündendem Pilot-Kraftstoff in die Zylinderräume der ersten und zweiten Gruppe von Zylindern wenn in den Zylinderräumen der Zylinder eine definierte Betriebstemperatur erreicht wird, und zünden des Gas/Luft-Gemisches mittels des selbstzündenden Pilot-Kraftstoffes, wobei die Startzündkerzen deaktiviert werden;

Besonders vorteilhaft ist es dabei, wenn die Losbrechdrehzahl etwa 50% der Startdrehzahl beträgt.

Vorzugsweise ist vorgesehen, dass in der durch die Kurbelwelle vorgegebenen Zündreihenfolge die Zylinder abwechselnd der einen Gruppe und der anderen Gruppe zugeordnet werden.

Somit werden anfänglich alle Zylinder mit Druckluft beaufschlagt, um das Losbrechmoment zu überwinden und eine vorher festgelegte Losbrechdrehzahl zu erreichen. Bei Erreichen der Losbrechdrehzahl wird bei der Hälfte der Zylinder, und zwar bei jedem zweiten Zylinder in der durch die Kurbelwelle vorgegebenen Zündreihenfolge, die Startluftzufuhr mittels Druckluftventile in den Druckluftzuführleistungen zu den Zylindern unterbrochen. In den von der Startluftversorgung getrennten Zylindern kann das angesaugte Gas/Luft-Gemischt mittels der Startzündkerzen entflammt werden und somit der Motor gestartet werden. Bei Erreichen einer motorspezifischen Startdrehzahl wird auch die Startluftzufuhr zu den verbliebenen Zylindern gestoppt, so dass auch in diesen Zylindern die Verbrennung beginnen kann. Nach Aufwärmung und dem Beginn der Lastaufnahme der Brennkraftmaschine übernimmt ein Common-Rail-System mit Micro-Pilot-Einspritzung in jeweils eine Vorkammer pro Zylinder die Gemischentflammung, so dass die Startzündkerzen abgeschaltet werden können. Dabei wird Pilot-Kraftstoff durch Düsenlöcher aus der Vorkammer in den durch den Zylinderraum gebildeten Hauptbrennraum eingebracht.

Die Erfindung wird im Folgenden anhand der Fig. näher erläutert.

Die Fig. zeigt eine Brennkraftmaschine mit in Reihe angeordneten Zylindern 1 bis 6, wobei die Zylinder 2, 3 und 6 einer ersten Gruppe A und die Zylinder 2, 4 und 6 einer zweiten Gruppe B zugeordnet sind. Die Brennkraftmaschine ICE weist ein Einlasssystem I und ein Auslasssystem E auf. Das brennbare Gas/Luft-Gemisch wird stromaufwärts eines Laders 7 eines Abgasturboladers 8 in einem Gasmischer 9 gebildet, wobei die zugeführte Luft mit Bezugszeichen 10, das eingebrachte Brenngas mit Bezugszeichen 11 und das Gas/Luft-Gemisch mit Bezugszeichen 12 angedeutet ist. Das Gas/Luft-Gemisch 12 wird über den Lader 7 und einen Ladeluftkühler 13 den einzelnen Zylindern 1 bis 6 zugeführt. Zur Zündung des Gas/Luft-Gemisches 12 während des Betriebes ist ein Common-Rail-System 14 zur Einspritzung von selbstzündendem Pilot-Kraftstoff vorgesehen, wobei jeweils pro Zylinder 1 bis 6 Pilot-Kraftstoff in eine in den Zylinderraum mündende Vorkammer 15 eingespritzt wird, welche Vorkammer 15 mit dem durch den Zylinderraum gebildeten Hauptbrennraum über Einspritzbohrungen strömungsverbunden ist. Der beispielsweise durch Diesel gebildete Pilot-Kraftstoff gelangt über die Düsenbohrungen in den Hauptbrennraum und entzündet dort das Gas/LuftGemisch.

Zum Starten der Brennkraftmaschine ICE ist ein Druckluftsystem 16 mit einer Druckluftquelle 17 vorgesehen, welche über eine Druckluftversorgungsleitung 18 und Druckluftzuführleitungen 19 mit den einzelnen Zylindern 1 bis 6 strömungsverbindbar ist. In den Druckluftzuführleitungen 19 ist dabei jeweils ein beispielsweise durch ein Magnetventil gebildetes Druckluftventil 20 und ein Rückschlagventil 21 angeordnet, wobei die Druckluftzuführleitungen 19 in den jeweiligen Zylinderraum jedes Zylinders 1 bis 6 münden. Weiters ist pro Zylinder 1 bis 6 jeweils eine in den Zylinderraum mündende Startzündkerze 22 vorgesehen.

Um ein sicheres Starten der Brennkraftmaschine ICE zu ermöglichen, werden zu Beginn des Startvorganges bei stillstehender Kurbelwelle alle Zylinder 1 bis 6 mit Druckluft beaufschlagt, um dass Losbrechmoment zu überwinden und eine vorher festgelegte Losbrechdrehzahl n₁ zu erreichen, welche beispielsweise 50% der typischen Startdrehzahl n₂ sein kann. Bei Erreichen der Losbrechdrehzahl n₁ werden die Zylinder 2, 3 und 6 der ersten Gruppe A mittels der Druckluftventile 20 von der Druckluftversorgung getrennt, wodurch in den Zylinderräumen die Verdünnung des eingebrachten Gas/Luft-Gemisches durch die Druckluft aufhört und somit ein zündfähiges Gas/Luft-Gemisch entsteht. Durch Aktivieren der Startzündkerzen 22 kann in den Zylindern 2, 3 und 6 der ersten Gruppe A das angesaugte Gas/Luft-Gemisch entflammt und damit die Brennkraftmaschine ICE gestartet werden. Ab Überschreiten der motorspezifischen Startdrehzahl n₂ wird auch die Druckluftzufuhr zu den verbliebenen Zylindern 1, 4, 5 der zweiten Gruppe B gestoppt, so dass auch in diesen Zylindern die Verbrennung beginnen kann. Nach Aufwärmen und dem Beginn der Lastaufnahme der Brennkraftmaschine ICE übernimmt das Common-Rail-System 14 für die Mikro-Pilot-Einspritzung in die Vorkammern 15 die Gemischentflammung, so dass die Startzündkerzen 22 abgeschaltet werden können.

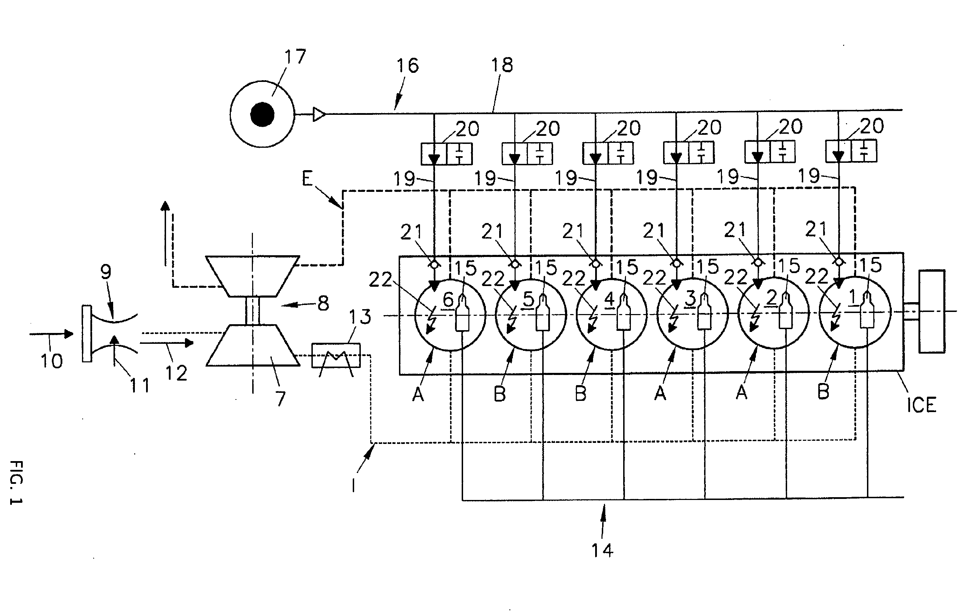

## Patentansprüche

1. Verfahren zum Starten einer mit Brenngas betriebenen Brennkraftmaschine (ICE) mit innerer Verbrennung, insbesondere eines Großgasmotors, wobei die Bildung eines brennbaren Gas/Luft-Gemisches im Einlasssystem (I), insbesondere in einem Gasmischer (9) stromaufwärts eines Laders (7), erfolgt, mit einer ersten und einer zweiten Gruppe (A, B) von Zylindern (1, 2, 3, 4, 5, 6), wobei während der Startphase die erste Gruppe (A) von Zylindern (2, 3, 6) zumindest zeitweise gefeuert betrieben wird und in die Zylinderräume der zweiten Gruppe (B) von Zylindern (1, 4, 5) zumindest zeitweise Druckluft eingeblasen wird, wobei zu Beginn des Startvorganges Druckluft in alle Zylinder (1, 2, 3, 4, 5, 6) der ersten und zweiten Gruppe (A, B) von Zylindern (1, 2, 3, 4, 5, 6) eingeblasen wird, solange die Drehzahl der Brennkraftmaschine eine definierte erste Drehzahl unterschreitet, und wobei bei Überschreiten der ersten Drehzahl die Druckluftzufuhr zur ersten Gruppe (A) von Zylindern (2, 3, 6) deaktiviert und gefeuert betrieben wird, **dadurch gekennzeichnet, dass**
- der ersten Drehzahl eine definierte Losbrechdrehzahl (n₁) zugeordnet wird,
- das Gas/Luft-Gemisches in den Zylinderräumen der ersten Gruppe (A) von Zylindern (2, 3, 6) mit jeweils zumindest einer Startzündkerze (22) pro Zylinder gezündet wird,
- die Druckluftzufuhr zur zweiten Gruppe (B) von Zylindern (1, 4, 5) gestoppt und das eingeblasene Gas/Luft-Gemisches in den Zylinderräumen der zweiten Gruppe (B) von Zylindern (1, 4, 5) mit jeweils zumindest einer Startzündkerze (22) pro Zylinder gezündet wird, wenn die Drehzahl der Brennkraftmaschine eine durch eine definierte Startdrehzahl (n₂) gebildete zweite Drehzahl überschreitet,
- selbstzündender Pilot-Kraftstoff in die Zylinderräume der ersten und zweiten Gruppe (A, B) von Zylindern (1, 2, 3, 4, 6) eingebracht wird, wenn in den Zylinderräumen der Zylinder (1, 2, 3, 4, 5, 6) eine definierte Betriebstemperatur erreicht wird, und das Gas/Luft-Gemisch mittels des selbstzündenden Pilot-Kraftstoffes gezündet wird, wobei die Startzündkerzen deaktiviert werden.

2. Verfahren nach Anspruch 1, **dadurch gekennzeichnet, dass** die Losbrechdrehzahl (n₁) etwa 50% der Startdrehzahl (n₂) beträgt.

3. Verfahren nach einem der Ansprüche 1 oder 2, **dadurch gekennzeichnet, dass** in der durch die Kurbelwelle vorgegebenen Zündreihenfolge die Zylinder abwechselnd der einen Gruppe (A; B) und der anderen Gruppe (B; A) zugeordnet werden.

## Claims

1. A method for starting an internal combustion engine (ICE) with an internal combustion system and operating with combustible gas, especially a large gas engine, wherein the formation of a combustible gas/air mixture occurs in the intake system (I), especially in a gas mixer (9) upstream from a supercharger (7), comprising a first and second group (A, B) of cylinders (1, 2, 3, 4, 5, 6), wherein the first group (A) of cylinders (2, 3, 6) is at least temporarily operated by sparking during the starting phase, and compressed air is injected at least temporarily into the cylinder chambers of the second group (B) of cylinders (1, 4, 5), wherein compressed air is injected at the beginning of the starting process into all cylinders (1, 2, 3, 4, 5, 6) of the first and second group (A, B) of cylinders (1, 2, 3, 4, 5, 6) as long as the speed of the internal combustion engine falls beneath a defined first speed, and wherein the supply of compressed air to the first group (A) of cylinders (2, 3, 6) is deactivated and operated by sparking upon exceeding the first speed, **characterised in that**
- a defined breakaway speed (n₁) is assigned to the first speed;
- the gas/air mixture in the cylinder chambers of the first group (A) of the cylinders (2, 3, 6) is ignited by means of at least one respective starter ignition plug (22) per cylinder;
- the supply of compressed air to the second group (B) of cylinders (1, 4, 5) is stopped and the gas/air mixture injected into the cylinder chambers of the second group (B) of cylinders (1, 4, 5) is ignited by means of at least one respective starter ignition plug (22) per cylinder when the rotational speed of the internal combustion engine exceeds a second rotational speed formed by a defined starting speed (n₂);
- self-igniting pilot fuel is introduced into the cylinder chambers of the first and second group (A, B) of cylinders (1, 2, 3, 4, 6) when a defined operating temperature is reached in the cylinder chambers of the cylinders (1, 2, 3, 4, 6), and the gas/air mixture is ignited by means of the self-igniting pilot fuel, wherein the starter ignition plugs are deactivated.

2. A method according to claim 1, **characterised in that** the breakaway speed (n₁) is approx. 50% of the starting speed (n₂).

3. A method according to one of the claims 1 or 2, **characterised in that** the cylinders are assigned in an alternating fashion to the one group (A; B) and the other group (B; A) in the ignition sequence predetermined by the crankshaft.

## Revendications

1. Procédé de démarrage d'un moteur à combustion interne entrainé par un gaz combustible (ICE), en particulier d'un moteur à gaz de grande puissance, selon lequel la formation d'un mélange gaz combustible/air s'effectue dans un système d'admission (1), en particulier dans un mélangeur de gaz (9) en amont d'un compresseur de suralimentation (7), comprenant un premier et un second groupe (A, B) de cylindres (1, 2, 3, 4, 5, 6), pendant la phase de démarrage, les cylindres (2, 3, 6) du premier groupe (A) de cylindres étant actionnés en étant alimentés au moins par intermittence et, dans les chambres des cylindres (1, 4, 5) du second groupe (B) de cylindres de l'air sous pression est soufflé au moins par intermittence, au début du processus de démarrage, de l'air sous pression étant soufflé dans tous les cylindres (1, 2, 3, 4, 5, 6) du premier et du second groupes (A, B) de cylindres (1, 2, 3, 4, 5, 6) tant que la vitesse de rotation du moteur à combustion interne est située au-dessous d'une première vitesse de rotation définie, et, lors du dépassement de cette première vitesse de rotation, l'alimentation en air sous pression des cylindres (2, 3, 6) du premier groupe (A) de cylindres est désactivée et ces cylindres sont actionnés en étant alimentés, **caractérisé en ce que**
- à la première vitesse de rotation est associée une vitesse de rotation de décollage (n₁) définie,
- le mélange gaz/air dans les chambres des cylindres (2, 3, 6) du premier groupe (A) de cylindres est allumé avec respectivement au moins une bougie d'allumage de démarrage (22) par cylindre,
- l'alimentation en air sous pression des cylindres (1, 4, 5) du second groupe (B) de cylindres est arrêtée et le mélange gaz/air soufflé dans les chambres des cylindres (1, 4, 5) du second groupe (B) de cylindres est allumé avec respectivement au moins une bougie d'allumage de démarrage (22) par cylindre lorsque la vitesse de rotation du moteur devient supérieure à une seconde vitesse de rotation formée par une vitesse de rotation de démarrage (n₂) définie,
- du carburant pilote à autoallumage est introduit dans les chambres des cylindres (1, 2, 3, 4, 6) du premier et du second groupes (A, B) de cylindres lorsqu'a été atteinte dans les chambres des cylindres (1, 2, 3, 4, 5, 6) une température de fonctionnement définie et le mélange gaz/air est allumé au moyen du carburant pilote à autoallumage, les bougies d'allumage de démarrage étant désactivées.

2. Procédé conforme à la revendication 1,
**caractérisé en ce que**
la vitesse de rotation de décollage (n₁) est égale à environ 50 % de la vitesse de rotation de démarrage (n₂).

3. Procédé conforme à l'une des revendications 1 et 2,
**caractérisé en ce que**
dans la succession d'allumages prédéfinie par le vilebrequin, les cylindres sont successivement associés à l'un des groupes (A, B) et à l'autre groupe (B, A).
